# EUROPÄISCHE PATENTSCHRIFT

(11) **EP 1 047 646 B1**
(45) Veröffentlichungstag und Bekanntmachung des Hinweises auf die Patenterteilung: **18.12.2002**
(21) Anmeldenummer: 99941308.1
(22) Anmeldetag: 02.09.1999
(51) Int. Cl.: C04B 14/24, C04B 26/00, E04C 2/04

(54) **MISCHUNG ZUR HERSTELLUNG WITTERUNGSBESTÄNDIGER BAUELEMENTE, SOWIE EIN VERFAHREN ZUR HERSTELLUNG SOLCHER BAUELEMENTE**
MIXTURE FOR PRODUCING WEATHER-RESISTANT BUILDING COMPONENTS AND METHOD FOR PRODUCING SAME
MELANGE PERMETTANT DE FABRIQUER DES ELEMENTS DE CONSTRUCTION RESISTANTS AUX INTEMPERIES ET PROCEDE DE FABRICATION ASSOCIE

(30) Priorität: 04.09.1998 AT 151098
(43) Veröffentlichungstag der Anmeldung: 02.11.2000
(73) Patentinhaber: Nigischer, Leopold, 2020 Hollabrunn (AT)
(72) Erfinder: Nigischer, Leopold, 2020 Hollabrunn (AT)
(74) Vertreter: Itze, Peter, Dipl.-Ing.
(86) Internationale Anmeldenummer: AT9900210
(87) Internationale Veröffentlichungsnummer: WO00014025

(56) Entgegenhaltungen:
- EP-A- 0 386 745
- DE-A- 3 622 780
- DATABASE WPI Section Ch, Week 198527 Derwent Publications Ltd., London, GB; Class L02, AN 1985-161564 XP002900838 & JP 60 090859 A (SHIKOKU CHEM IND CO LTD) , 22. Mai 1985 (1985-05-22)

## Beschreibung

Die Erfindung bezieht sich auf eine Mischung zur Herstellung witterungsbeständiger Bauelemente, sowie auf ein Verfahren zur Herstellung solcher Bauelemente.

Viele Bauelemente, wie Türumrahmungen, Fensterumrahmungen, Simse, Schabracken sowie Reliefs oder Stukkatur werden herkömmlicherweise, je nach Verwendungszweck, entweder aus Beton oder aber aus Gips gegossen, wobei die Betonbauelemente auch für Außenwandungen, die Gipsgießelemente, jedoch ausschließlich für Innenwandungen geeignet sind. Dies rührt daher, daß die Gipsgießteile sehr hygroskopisch sind und aufgrund der Kapillarwirkungen im Inneren das Wasser aufnehmen, sodaß Gips sehr witterungsanfällig ist. Betongießteile sind zwar witterungsbeständig, haben jedoch den Nachteil, daß sie sehr schwer sind und zudem auch lange Zeit zum Aushärten benötigen.

Der Erfindung liegt nun die Aufgabe zugrunde, geformte Bauelemente der eingangs genannten Art zu schaffen, welche ein geringes spezifisches Gewicht aufweisen und rasch in der Form aushärten.

Erfindungsgemäß wird diese Aufgabe dadurch gelöst, daß geblähtes mineralisches Material mit einer Körngröße zwischen 0,5 und 2 mm mit einem katalytisch aushärtbaren Polymerharz-Bindemittel im Verhältnis von 30 : 1 bis 10 : 1, insbesondere 20 : 1 bis 15 : 1, vermischt ist. Eine derartige Zusammensetzung ermöglicht es, innerhalb kurzer Zeit stabile Formelemente herzustellen, da das Aushärten aufgrund des Katalysators sehr rasch erfolgt. Aufgrund des Mischungsverhältnisses sind die mineralischen Körner nicht eingegossen, sondern weisen nur an der Oberfläche eine Schicht von Polymerharz-Bindemittel auf, so daß die einzelnen Körner untereinander über Polymerharzbrücken verbunden sind, die sich an den Berührungspunkten der einzelnen Körner ausbilden. Aufgrund der so erzielten offenporigen Struktur des Bauelementes werden Kapillarwirkungen innerhalb des Elementes vermieden, zwar Wasser eindringen, jedoch innerhalb der Kapillaren nicht festgehalten wird. Vielmehr kann das Wasser aus den Zwischenräumen zwischen den einzelnen Körnern aufgrund der Schwerkraft von alleine abfließen, sodaß bei Auftreten von Frost keine Sprengwirkung des Eises 5 eintreten kann. Durch die Wahl der Körnchengröße wird die Festigkeit des Bauelementes gesteuert, u.zw. dahingehend, daß die Festigkeit bei der Vielzahl kleinerer Körner höher ist als bei ausschließlich großen Körnern, wobei allerdings zu beachten ist, daß bei der Anwendung nur kleiner Körnchen das spezifische Gewicht des Bauelementes steigt.

Vorteilhafterweise kann das geblähte mineralische Material durch Blähglaskörner gebildet sein, welche aufgrund ihrer Oberflächenstruktur einerseits eine gute Haftung des Polymerharzbindemittels ergeben und anderseits verhindern, daß Feuchtigkeit aufgrund der Kapillarwirkungen in das Innere der Körner eindringt. Dabei kann das Polymerharzbindemittel eine Zweikomponentenmischung aus einem 5 Benzyletherharz und einem Polyisocyanat sein, welche mittels eines gasförmigen Katalysators, vorzugsweise einem Kohlenwasserstoff substutuierten Amin, wie z.B. Dimethylisopropylamin, Dimethylamin oder Triethylamin, aushärtbar ist. Dies ermöglicht eine rasche Aushärtung dadurch, daß der gasförmige Katalysator durch die Mischung aus mineralischem Material und aushärtbarem Polymerharzbindemittel hindurchgeblasen wird, was eine rasche und gleichmäßige Verteilung innerhalb des Bauelements ergibt, wodurch eine zuverlässige und vollständige Aushärtung des Bindemittels erreicht wird. Es kann jedoch das Polymerharzbindemittel eine Zweikomponentenmischung aus einem Benzyletherharz und einem Polyisocyanat sein, welche mittels eines eine heterocyclische aromatische Verbindung darstellenden Katalysators aushärtbar ist. Dies ermöglicht es, auf einen gasförmigen Katalysator und die dazu erforderlichen Druckeinrichtungen zu verzichten, wobei der Katalysator kurz vor Beendigung des Mischvorganges vor dem Einfüllen der Mischung in die Form zugegeben wird, sodaß der Aushärtvorgang selbsttätig einsetzen und ablaufen kann.

Um sicherzustellen, daß die Körner untereinander eine optimale Anlage besitzen, kann die Mischung in eine Form eingebracht, durch Rütteln der Form, gegebenenfalls unter Auflegen eines Gegengewichtes, verdichtet und mittels des Katalysators ausgehärtet werden. Um eine strukturierte hintere Fläche, über welche die Bauelemente an der Wand anzubringen sind, zu erzielen, können die Einblasöffnungen für einen gasförmigen Katalysator an der Rückseite des herzustellenden Bauelementes angeordnet werden, wobei durch das Einblasen im Körper des Bauelementes an den den Einblasöffnungen gegenüberliegenden Stellen des Bauelementes Vertiefungen od.dgl. ausgebildert werden. Weiters können für eine sichere Anbringung des Bauelementes in letzteres Ausnehmungen zur Aufnahme von Verbindungungselementen eingeformt werden. Dies ermöglicht z.B. das Einbringen von Verankerungselementen, die dann mit einem speziellen Kleber eingeklebt werden. Derartige Verankerungselemente können einerseits zum Anbringen an der Wandung und anderseits auch zum Verbinden von derartigen Bauteilen untereinander dienen. Schließlich können Verbindungselemente in die Mischung vor dem Aushärten eingelegt und an Ort und Stelle gehalten werden, was zur Folge hat, daß diese Verbindungselemente direkt vom Polymerharzbindemittel mit den mineralischen Körnchen verbunden werden, sodaß ein besonders guter Halt dieser Verbindungselemente erreicht wird.

Im folgenden werden bevorzugte Ausführungsbeispiele beschrieben.

Bei den Versuchen werden Blähglaskugeln mit zwei verschiedenen Größensortierungen verwendet, u.zw. betrifft die Größensortierung 1 die Größen von 0,5 bis 1 mm Durchmesser und die Blähglaskugelsortierung 2 die Größen von 1 bis 2 mm Durchmesser. Die Versuche wurden mit einem Zweikomponentenharz durchgeführt, u.zw. als Komponente 1 ein Benzyletherharz in Lösungsmitteln (Iso Cure 366, erhältlich bei Ashland Südchemie-Hantos GmbH) und als Komponente 2 ein Polyisocyanat in Lösungsmitteln (Iso Cure 666, erhältlich bei Ashland Südchemie-Hantos GmbH). Dieses Zweikomponentenharz wird mit den Blähglaskugeln vermischt und mit einem Dimethylisopropylamin (Katalysator 704, erhältlich bei Ashland Südchemie-Hantos GmbH) ausgehärtet.

Weitere Versuche wurden mit einem Zweikomponentenharz, Benzyletherharz in Lösungsmittel (Pep Set 1505 R14, ebenfalls erhältlich bei Ashland Südchemie-Hantos GmbH) und Komponente 2 (Iso Cure 2/602, Ashland Südchemie-Hantos GmbH) verwendet, die mit den Blähglaskugeln vermischt wurden. Als Härter wurde eine heterocyclische aromatische Verbindung (Härter PPP 3595, Ashland Südchemie-Hantos GmbH) eingesetzt, welche der Mischung aus Blähglaskörner und Zweikomponentenharz knapp vor Beendigen des Mischens und Einbringen in die Gießform zugegeben wird.

In Tabelle 1 sind die Mischungsverhältnisse von Komponente 1 zu Komponente 2 sowie der Blähglaskugeln der Größensortierung 1 und 2, das Verhältnis von Binder zu Füllstoff und schließlich die mittlere Biegefestigkeit der so erhaltenen Proben angeführt.

**Tabelle 1**

| | Teil 1 [ml] | Teil 2 [ml] | Blähglaskugeln 0,5-1 [ml] | Blahglaskugeln 1-2 [ml] | Verhältnis: Binder zu Füllstoff | mittlere Biegefestigkeit [N/cm²] |
|---|---|---|---|---|---|---|
| Probe 1 | 185 | 174 | 3.000 | 2.500 | 1:15 | 2,70 |
| Probe 2 | 15 | 14 | 300 | 250 | 1:19 | 2,60 |
| Probe 3 | 12 | 11 | 300 | 250 | 1:24 | 2,60 |
| Probe 4 | 9 | 8 | 300 | 250 | 1:32 | 2,03 |
| Probe 5 | 21,5 | 20,5 | 300 | 250 | 1:13 | 2,83 |
| Probe 6 | 18,5 | 17,5 | 550 | 0 | 1:15 | *3,33 |
| Probe 7 | 18,5 | 17,5 | 0 | 550 | 1:15 | x 2,00 |
| probe 8 | 15 | 14 | 350 | 200 | 1:19 | +2,77 |

In Fig. 1 sind die erhaltenen, in der Tabelle 1 angeführten Biegefestigkeitswerte graphisch wiedergegeben. Die Ergebnisse der in Tabelle 1 aufscheinenden Proben sind mit gleicher Nummer in der graphischen Darstellung angegeben.

Fig. 2 und 3 zeigen eine bevorzugte Ausführungsform einer Gießform, wobei Fig. 2 ein Vertikalschnitt gemäß Linie II-II der Fig. 3 und Fig. 3 in Schnitt nach Linie III-III der Fig. 2 ist.

Die Form 10 besteht aus einem Formtrog 11 und einem Deckel 12, welcher den Formhohlraum 13 des Formtroges 11 dicht abschließt. Mit 14 ist die gemeinsame Katalysatorzuleitung bezeichnet, von welcher Stichleitungen 15 ausgehen, die bei 15' in den Forminnenraum 13 einmünden. Diese Katalysatorzuleitung 14 bzw. die Stichleitungen 15 sind am Deckel 12 vorgesehen, und am Formtrog 11 sind vom Forminnenraum 13 wegführende Stichleitungen 16 angeordnet, die von ihren Auslaßöffnungen 16' am Formhohlraum 13 wegführen. Die Leitungen 16 münden in gemeinsame Katalysatorableitungen 17.

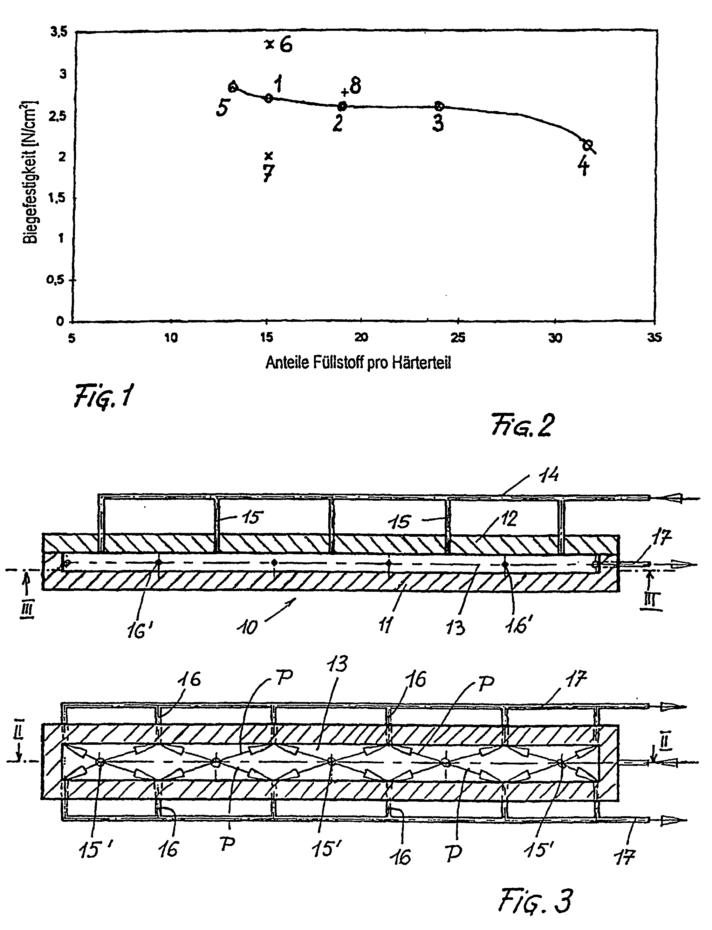

Die über die Leitung 14 und die Stichleitung 15 eingebrachten gasförmigen Katalysatoren verteilen sich im Forminnenraum gemäß den Pfeilen P (Fig. 3), wodurch aufgrund der Anordnungen der Ausmündungen 15' der Katalysatorzuleitungen und der Auslaßöffnungen 16' der Katalysatorableitungen eine sehr gleichmäßige und rasche Durchflutung des gesamten Formhohlraumes und damit der im Formhohlraum befindlichen Masse stattfindet.

In nicht dargestellter Weise kann die Form 10 auf einem Rütteltisch aufgestellt sein, u.zw. so, daß der Boden des Formtroges 11 auf der Rüttelplatte liegt, danach dann der Formhohlraum 13 mit dem zu formenden Gemisch befüllt wird und zwar so, daß ein gewisser Überschuß an Formmasse über den oberen Rand des Formtroges 11 übersteht, und dann der Deckel 12 auf die Formmasse aufgelegt wird. Der Deckel 12 wirkt dann als Gegengewicht, sodaß bei Betätigung des Rüttlers eine beidseitige Einwirkung der Rüttelkräfte auf die zu formende Masse erfolgt. Dies ergibt eine äußerst gleichmäßige Verdichtung der Formmasse im Formhohlraum 13.

## Patentansprüche

1. Mischung zur Herstellung witterungsbeständiger Bauelemente, **dadurch gekennzeichnet, daß** geblähtes mineralisches Material mit einer Korngröße zwischen 0,5 und 2 mm mit einem katalytisch aushärtbaren Polymerharzbindemittel im Verhältnis von 30 : :1 bis 10 : 1, insbesondere 20 : 1 bis 15 : 1, vermischt ist.

2. Mischung nach Anspruch 1, **dadurch gekennzeichnet, daß** das geblähte mineralische Material durch Blähglaskörner gebildet ist.

3. Mischung nach Anspruch 1 oder 2, **dadurch gekennzeichnet, daß** das Polymerharzbindemittel eine Zweikomponenten-Mischung aus einem Benzyletherharz und einem Polyisocyanat ist, welche mittels eines gasförmigen Katalysators, vorzugsweise einem Kohlenwasserstoff substituierten Amin, wie z.B. Dimethylisopropylamin, Dimethylamin oder Triethylamin, aushärtbar ist.

4. Mischung nach Anspruch 1 oder 2, **dadurch gekennzeichnet, daß** das Polymerharzbindemittel eine Zweikomponenten-Mischung aus einem Benzyletherharz und einem Polyisocyanat ist, welche mittels eines eine heterocyclische aromatische Verbindung darstellenden Katalysators aushärtbar ist.

5. Verfahren zur Herstellung witterungsbeständiger Bauelemente mittels einer Mischung nach einem der Ansprüche 1 bis 4, **dadurch gekennzeichnet, daß** die Mischung in eine Form eingebracht, durch Rütteln der Form, gegebenenfalls unter Auflegen eines Gegengewichtes, verdichtet und mittels des Katalysators ausgehärtet wird.

6. Verfahren nach Anspruch 5, **dadurch gekennzeichnet, daß** Einblasöffnungen für einen gasförmigen Katalysator an der Rückseite des herzustellenden Bauelements angeordnet werden, wobei durch das Einblasen im Körper des Bauelementes an den den Einblasöffnungen gegenüberliegenden Stellen des Bauelementes Vertiefungen od.dgl. gebildet werden.

7. Verfahren nach Anspruch 5 oder 6, **dadurch gekennzeichnet, daß** in das Bauelement Ausnehmungen zur Aufnahme von Verbindungselementen eingeformt werden.

8. Verfahren nach einem der Ansprüche 5 - 7, **dadurch gekennzeichnet, daß** Verbindungselemente in die Mischung vor dem Aushärten eingelegt und an Ort und Stelle gehalten werden.

## Claims

1. A mixture for producing weather-proof building elements, **characterized in that** the expanded mineral material with a grain size of between 0.5 and 2 mm is mixed with a catalytically curable polymer resin binder at a ratio of 30:1 to 10:1, especially 20:1 to 15:1.

2. The mixture acccording to claim 1, **characterized in that** the expanded mineral material is formed by expanded glass grains.

3. The mixture according to claim 1 or 2, **characterized in that** the polymer resin binder is a two-component mixture made of benzyl ether resin and a polyisocyanate which is curable by means of a gaseous catalyst, preferably a hydrocarbon substituted amine such as dimethyl isopropylamine, dimethylamine or triethylamine.

4. The mixture according to claim 1 or 2, **characterized in that** the polymer resin binder is a two-component mixture made of benzyl ether resin and a polyisocyanate which is curable by means of a heterocyclic aromatic compound preparing catalyst.

5. A method for producing weather-proof building elements by means of a mixture according to one of the claims 1 to 4, **characterized in that** the mixture is introduced into a mould, compacted by shaking the mould, optionally by placing thereon a counterweight, and is cured by means of the catalyst.

6. The method according to claim 5, **characterized in that** injection openings for a gaseous catalyst are arranged on the rear side of the building element to be made, with recesses or the like being formed by the injection in the body of the building element at the places opposite of the injection openings.

7. The method according to claim 5 or 6, **characterized in that** recesses for receiving connecting elements are shaped into the building element.

8. The method according to one of the claims 5 to 7, **characterized in that** connecting elements are placed into the mixture prior to curing and are held at the location.

## Revendications

1. Mélange pour la fabrication d'éléments de construction résistant aux intempéries, **caractérisé en ce que** de la matière minérale soufflée d'une granulométrie entre 0,5 et 2 mm avec un agglomérant pouvant durcir par catalysation en résine de polymère dans une proportion de 30 :1 à 10:1, en particulier de 20 :1 à 15 :1 est mélangé.

2. Mélange selon la revendication 1, **caractérisé en ce que** la matière minérale soufflée est composée de grains de verre soufflé.

3. Mélange selon la revendication 1 ou 2, **caractérisé en ce que** l'agglomérant en résine de polymère est un mélange bi-composite de résine de benzyléther et de polyisocyanate, qui peut être durci au moyen d'un catalyseur gazeux, de préférence un amine substitué d'hydrocarbure, comme par exemple du diméthylisopropylamine, du diméthylamine ou du triéthylamine.

4. Mélange selon la revendication 1 ou 2, **caractérisé en ce que** l'agglomérant en résine de polymère est un mélange bi-composite de résine de benzyléther et de polyisocyanate, qui peut être durci au moyen d'un catalyseur effectuant une liaison aromatique hétérocyclique.

5. Procédé pour la fabrication d'éléments de construction résistant aux intempéries au moyen d'un mélange selon une des revendications 1 à 4, **caractérisé en ce que** le mélange est versé dans un moule, compact en secouant le moule, éventuellement en y déposant un contre-poids et durci au moyen du catalyseur.

6. Procédé selon la revendication 5, **caractérisé en ce que** des orifices de soufflage pour un catalyseur gazeux sont disposés sur la face postérieure de l'élément de construction à fabriquer, des renfoncements ou similaires étant constitués aux endroits situés en face des orifices de soufflage par soufflage dans le corps de l'élément de construction.

7. Procédé selon la revendication 5 ou 6, **caractérisé en ce que** des évidements destinés à recevoir des éléments de liaison sont formés dans l'élément de construction.

8. Procédé selon une des revendications 5 à 7, **caractérisé en ce que** des éléments de liaison sont déposés dans le mélange avant le durcissement et y sont maintenus en place.
